Europäisches Patentamt

European Patent Office

Office européen des brevets

(11) Publication number: **0 316 464**
**A1**

## EUROPEAN PATENT APPLICATION

(21) Application number: **87116823.3**

(22) Date of filing: **13.11.87**

(51) Int. Cl.⁴: **F16H 29/04**

(43) Date of publication of application:
**24.05.89 Bulletin 89/21**

(84) Designated Contracting States:
**AT BE CH DE ES FR GB GR IT LI LU NL SE**

(71) Applicant: **DeSousa, Egas J.**
**8373 Meadowdale**
**Grand Blanc, MI 48439(US)**

(72) Inventor: **DeSousa, Egas J.**
**8373 Meadowdale**
**Grand Blanc, MI 48439(US)**

(74) Representative: **Schaumburg, Thoenes &**
**Englaender**
**Mauerkircherstrasse 31 Postfach 86 07 48**
**D-8000 München 80(DE)**

(54) Infinitely variable rotary drive transmission.

(57) The present invention provides for improvements made to the infinitely variable rotary drive transmission patent number 4,557,161 dated Dec. 10, 1985, having an input member and an output member rotatably mounted to a housing. Two articulated shafts are rotatably mounted on two slides such that the degree of articulation can be varied in infinite increments by operating a lever mounted on the housing. The two articulated shafts are connected rotatably and synchronously. The input member, through a substantial speed reduction, drives the articulated shafts. The articulated shafts are connected by rods to a pair of cooperating overrunning clutch assemblies mounted on an intermediate shaft which in turn is rotatably mounted on the housing. Another clutch assembly is mounted on the intermediate shaft to restrict its movement to one direction only. The intermediate shaft through a substantial speed increase drives the output member.

FIG 2

# ~INFINITELY VARIABLE ROTARY DRIVE TRANSMISSION

## Background of Invention

### I. Field of Invention

The present invention relates generally to transmission and more particularly to an infinitely variable rotary drive transmission.

### II. Description of the Prior Art

There are a number of previously known variable rotary drives, also known as speed variators, which drivingly connect an input shaft to an output shaft at a variable ratio. These previously known devices, however, are complex expensive in construction and energy inefficient in operation.

My previous invention for an infinitely variable rotary drive transmission - Patent Number 4,557,161 - overcomes all of the above mentioned disadvantages while having some inherent design and construction difficulties.

## Summary of the Present Invention

The present invention provides for improvements to the design and build of my previous infinitely variable rotary drive transmission mainly by balancing reciprocating forces and improving the durability of the transmission.

In brief, the improved transmission of the present invention comprises an input member and an output member rotatably mounted to a housing. Two articulated shafts are rotatably mounted on two slides such that the degree of articulation can be varied in infinite increments by operating a lever mounted on the housing. The two articulated shafts are connected to rotate synchronously. The input member drives the articulated shafts through a substantial speed reduction. The articulated shafts are connected by rods to two cooperating overrunning clutch assemblies mounted fixedly on an intermediate shaft which, in turn, is rotatably mounted on the housing. Another clutch assembly fixedly connected to the housing is mounted rotatably on the intermediate shaft to restrict its movement to one direction only. The intermediate shaft through a substantial speed increase drives the output member.

The two clutch assemblies connected to the articulated shafts are designed to overrun in a predetermined direction, while as the third clutch assembly is designed to overrun in the opposite direction.

The articulated shafts are so phased with respect to each other that the rods connecting them to the clutches arrive at the top of the stroke simultaneously, thus balancing the reciprocating forces generated. The lever, which through a cam varies the degree of articulation of the shaft, varies the drive ratio between the input and output shafts.

## Brief Description of the Drawing

A better understanding of the present invention will be had upon reference to the following detailed description when read in conjunction with the accompanying drawing, wherein like reference characters refer to like parts throughout the several views, and in which:

Fig. 1 is an elevation view of the transmission assembly;

Fig. 2 is a bottom view of the preferred embodiment of the invention with a cover removed for clarity;

Fig. 3 is a sectional view taken along lines 3-3 and with parts removed for clarity;

Fig. 4 is a fragmentary sectional view taken substantially along lines 4-4 and with parts removed for clarity;

Fig. 5 is a partial plan view of the cam used to vary the articulation of the shafts;

Fig. 6 is a sectional view taken along lines 5-5 and showing the lever and cam mechanism;

Fig. 7 is a sectional view of the preferred form of the clutch assembly of the present invention;

Fig. 8 is an isolated view of the link used in the articulated shafts.

Fig. 9 is another view of the same link shown in Fig. 8.

## Detailed Description of a Preferred Embodiment of the Present Invention

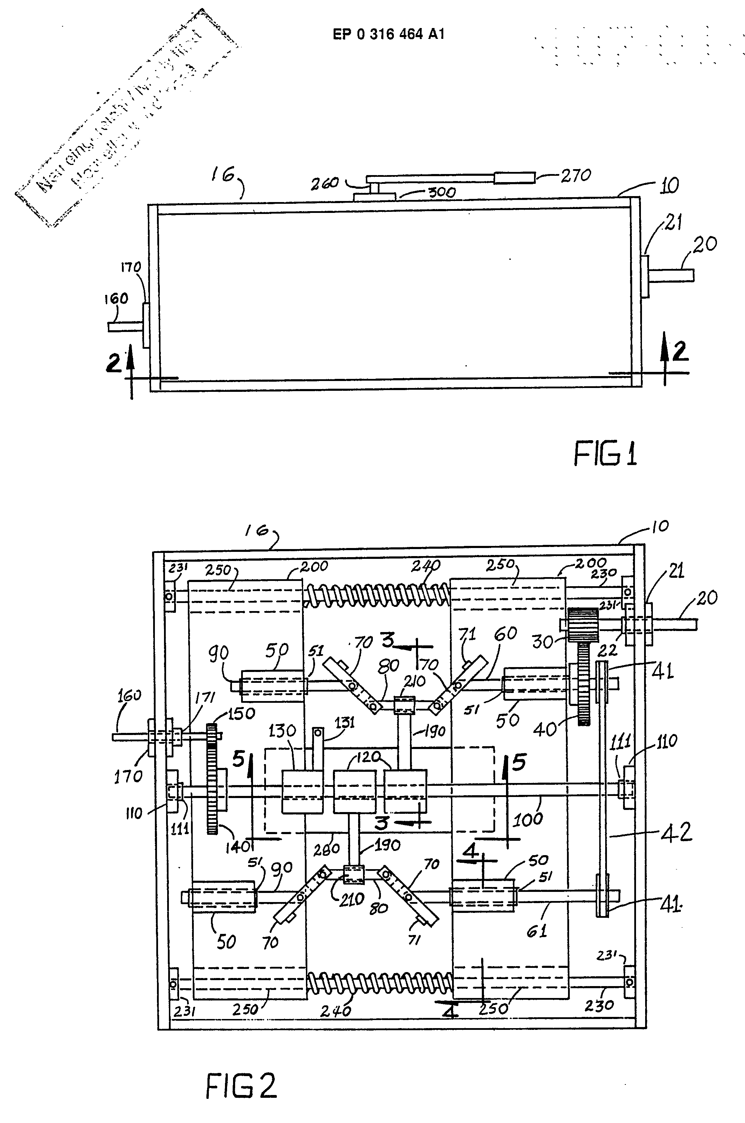

With reference to Figs. 1 and 2, a preferred embodiment of the improved transmission 10 is thereshown and comprises a housing 16.

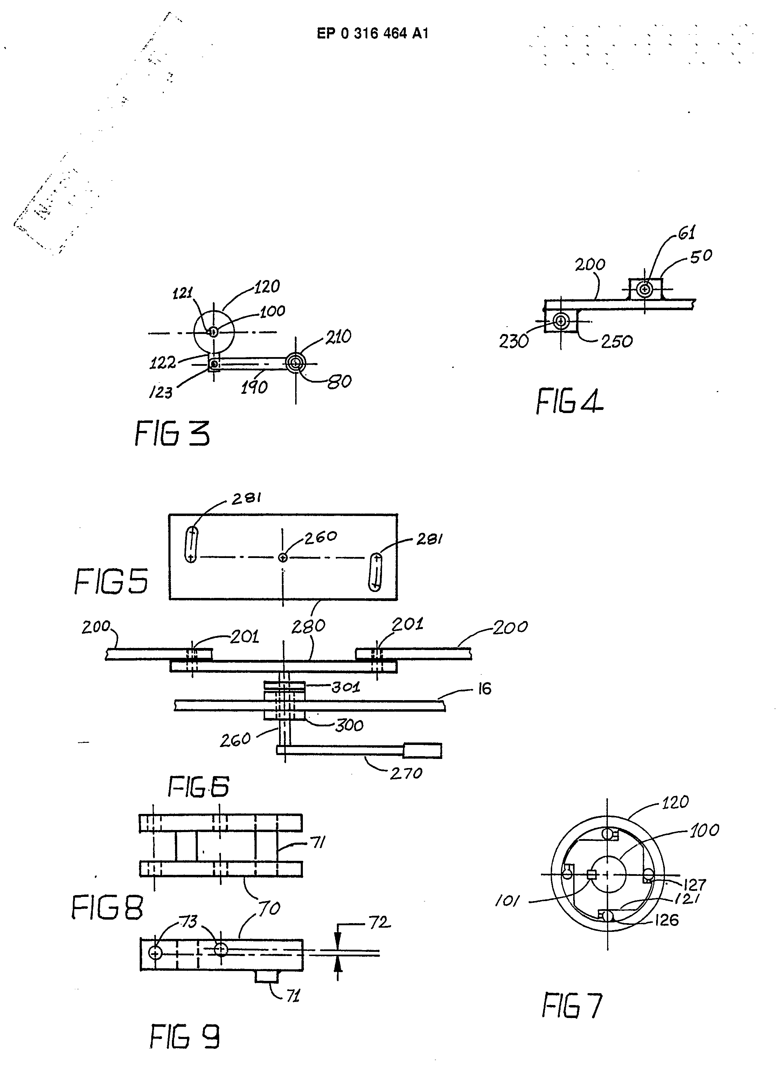

A pair of parallel rods is secured to the housing 16 by means of a pair of brackets 231. A pair of slides 200 is mounted on the rods 230 through linear bearings 250, and kept spaced apart by a pair of compression springs 240. Referring to Figs. 5 and 6, a cam plate 280 with internal cam surfaces 281 is connected to the slides 200 by means of cam rollers 281. Still referring to Figs. 5 and 6, a shaft 260 is mounted through a sleeve bearing 300 to the housing 16 and positioned by a lock collar 301. Shaft 260 is connected fixedly at one end to the cam 280 and at the other end to the controlling lever 270. The internal cam surfaces 281 are such that they move the cam rollers 201 and therefore the slides 200 to which the cam rollers are fixed whenever the shaft 260 is rotated thus varying the spacing between the slides 200. With reference to Fig. 2 the transmission 10 further comprises a pair of articulated shafts each having a central crank portion 80 and two link segments 70. One end of each link segment is pivotally secured to each end of the central crank portion 80. Portions 60, 61 and 90 of articulated shafts are pivotally secured to a central position of the link 70. Referring now to Figs. 8 and 9 the links are constructed to ensure the articulation of the shaft in one direction only by attaching segments 71 near the free end. Pivot holes 73 are located a distance 72 apart from each other along the centerline of the link 70 to ease the initiation of the angular movement of the articulated shaft.

Also with reference to Fig. 2 segments 60, 61 and 90 of the articulated shafts are mounted through bearing blocks 50 on the slides 200 and secured in position by lock collars 51. Again with reference to Fig. 2 the input shaft 20 is mounted through a sleeve bearing 21 to housing 16 and secured in place with lock collars 22. Input member 20 drives the articulated shaft member 60 through a substantial speed reduction obtained by gears 30 and 40 rigidly mounted on respective shafts 20 and 60. A pair of similar sprockets 41 rigidly mounted on shafts 60 and 61 is drivingly connected by a chain 42 such that the crank portions 80 of the articulated shafts arrive at the top of the stroke simultaneously. With reference to Figs. 2 and 3 now, a pair of rods 190 is used to connect the crank shaft 80 to the overrunning clutches 120 which in turn are fixedly mounted on intermediate shaft 100. Rods 190 are mounted through sleeve bearings on crank shafts 80 on one end, while being pivotally secured by pins 123 to extensions 122 attached to the clutch assemblies 120.

Fig. 7 shows a cross sectional view of the preferred overrunning clutch assembly 120. This assembly as shown transfers power positively in the clockwise direction from shaft 100 through key 101, to hub 121. Rollers 122 held spaced by springs 123 engage the outer housing 120 whenever the shaft is subjected to a clockwise movement and, reciprocally, when the outer housing 120 is subjected to a clockwise movement the rollers 122 transmit that movement to the shaft 100 through hub 121 and key 101.

Referring back to Fig. 2 the intermediate shaft 100 is mounted on the housing 16 through bearings 110 and located by lock collars 111. Output member 160 mounted on housing 16 through bearings 170 and located by lock collars 171 is drivingly connected to intermediate shaft 100 through a substantial speed increase by gears 140 and 150. Gears 140 and 150 are in turn fixedly mounted on respective shafts 100 and 160.

Still referring to Fig. 2 overrunning clutch assembly 30 is fixedly mounted on intermediate shaft 100. This clutch assembly is built to overrun in the direction opposite to that of pair of clutches 120 and has the purpose of protecting the transmission 10 from any unwarranted movement incoming from output shaft 160. The outer housing 120 of overrunning clutch 130 is rigidly connected to the housing 10 by a brace 131.

With particular reference now to Fig. 2 it can be seen that the degree of articulation of the articulated shaft, i.e. the radial offset of the crank portion 80 from the portion 60, 61 and 90 can be infinitely varied from zero to a predetermined maximum amount by moving the controlling lever 270. Thus, it can be seen that, whatever the speed to the input member 20, the speed of the output member 160 can be varied from zero to a predetermined maximum amount.

From the foregoing it can be seen that the present invention provides improvements to my earlier invention patent number 4,557,161 by firstly reducing the reciprocating forces through a reduction in the speed of the reciprocating masses and then balancing the remaining resultant forces through two opposite articulated shafts. Overrunning clutch 131 providing protection to the transmission is also an improvement that makes this transmission reliable simple yet wholly effective in operation. Having described my invention, however, many modifications thereto will become apparent to those skilled in the art without deviation from the spirit of the invention. For example different gears or clutch assemblies may be employed while remaining within the spirit and scope of the invention.

## Claims

1. An infinitely variable rotary drive transmission comprising:
a rotary input member adapted to be connected with rotary power input means,
a rotary output member adapted to be connected with a load device,
a driving shaft having an articulated portion forming a crank and connected with said rotary input member to be driven thereby,
a driven shaft connected with said output member for driving said output member
, a one way clutch connected between said crank and said driven shaft,
and means for changing the throw of said crank.

2. The invention as defined in Claim 1 including speed-reducing gear means connected between said input member and said driving shaft.

3. The invention as defined in Claim 1 including:
a second driving shaft having an articulated portion forming a second crank and connected with said input member to be driven thereby,
a second one way clutch connected between said second crank and on said driven shaft,
and means for changing the throw of said second crank.

4. The invention as defined in Claim 3 wherein said driving shafts are rotated in synchronism with each other and said cranks are rotated in opposite phase relative to each other.

5. The invention as defined in Claim 1 including means coupled with said driven shaft for allowing rotation in one direction and preventing rotation in the opposite direction.

FIG 1

FIG 2

FIG 3

FIG 4

FIG 5

FIG 6

FIG 7

FIG 8

FIG 9

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | GB-A- 5 849 (JUSTICE)(A.D. 1914)<br>* Page 1, lines 10-17; page 2, line 57 - page 3, line 2 * | 1,2 | F 16 H 29/04 |
| X | US-A-1 557 432 (DEFORDT)<br>* Page 1, lines 69-72; page 2, lines 85-98 * | 1,2,5 | |
| X | US-A-3 449 972 (WICENEC)<br>* Column 4, lines 26-32; figure 4 * | 1,2 | |
| X | BE-A- 445 246 (PINGUELY-GARNIER)<br>* Page 7, line 22 - page 8, line 3 * | 1,3,4 | |
| X | FR-A- 897 094 (BRAUER)<br>* Page 3, lines 28-37 * | 1,5 | |
| X,D | US-A-4 557 161 (DESOUSA)<br>* Abstract * | 1 | |
| A | DE-C- 603 646 (CAVALLO)<br>* Page 1, lines 1-14; figure 2 * | 1,3,4 | TECHNICAL FIELDS SEARCHED (Int. Cl.4) |
| E | US-A-4 711 139 (DESOUSA)<br>* Whole document * | 1-5 | F 16 H |

The present search report has been drawn up for all claims

| Place of search | Date of completion of the search | Examiner |
|---|---|---|
| THE HAGUE | 17-03-1988 | FLODSTROEM J.B. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)